Europäisches Patentamt

European Patent Office

Office européen des brevets

(19)

(11) Publication number: **0 042 946**

**A2**

(12) # EUROPEAN PATENT APPLICATION

(21) Application number: **81103614.4**

(22) Date of filing: **12.05.81**

(51) Int. Cl.³: **G 06 K 7/10**

(30) Priority: **25.06.80 US 162868**
**25.06.80 US 162867**

(43) Date of publication of application:
**06.01.82 Bulletin 82/1**

(84) Designated Contracting States:
**DE FR GB IT**

(71) Applicant: **International Business Machines Corporation**

**Armonk, N.Y. 10504(US)**

(72) Inventor: **Dickson, LeRoy, David**
**4805 Connell Drive**
**Raleigh, NC 27612(US)**

(72) Inventor: **Woodland, Norman Joseph**
**4001 Yadkin Street**
**Raleigh, NC 27609(US)**

(74) Representative: **Bonneau, Gérard**
**COMPAGNIE IBM FRANCE Département de Propriété Industrielle**
**F-06610 La Gaude(FR)**

(54) **Holographic scanner for generating scan patterns and its application to the sensing of bar code labels.**

(57) The holographic scanner includes a rotating glass disk (20) having an annular track of sectorial holographic diffraction gratings or holofacets (22) for deflecting an impinging laser (24) beam along arcuate scan lines. The beam which sweeps along these scan lines is redirected by beam folding mirrors (30), to create specific scan patterns focused in predetermined regions (36,38) adjacent a scanner window (32). Similar or dissimilar scan patterns can be generated depending upon the characteristics of the holofacets (22) and the placement of the beam folding mirrors (30). The scan patterns can be focused at different distances from the scanner window (32) to increase the size of the "gate" through which a label must pass in order to be successfully scanned. The returning light is focused by a lens (40) onto a photodetector (42) which generates an electrical signal proportional to the reflected radiation amplitude.

FIG. 1

HOLOGRAPHIC SCANNER FOR GENERATING SCAN PATTERNS
AND ITS APPLICATION TO THE SENSING OF
BAR CODE LABELS

## Description

### Technical Field

The present invention relates to optical scanners and more particularly to a holographic scanner for generating scan patterns used in the sensing of bar code labels on products in a supermarket.

### Background art

For sound business reasons, more and more supermarkets have begun using bar code scanners at their checkout stands. Generically speaking, all such scanners direct a light beam across a UPC (Universal Product Code) label on a product being checked and detect variations in the level of light reflected from the label. The electrical representation of the detected optical signal is decoded to establish the digital value of the UPC label. The digital value is used to access a lookup table which contains the price and description of the item carrying the label. The price and description are used to prepare the customer receipt tape. The same information can be used for inventory control or other store management purposes.

One of the reasons for using bar code scanners in checkout operations is that such scanners can significantly increase throughput at a checkout stand when the scanner is operating properly and is being used properly. However, operators sometimes fail to use a scanner correctly by not holding a product in such a way that the UPC label passes through the region or "gate" required for a successful scan. This "gate" is, of course, adjacent the scanner window in the surface of the checkout stand.

Specific scan patterns have been designed to make this "gate" as large as possible. Examples of such patterns include a stitch bar pattern having several vertical scan lines and a single horizontal scan line, a lissajous patterns having overlapped, out-of-phase sinusoids forming side-by-side Xs, and single or multiple X patterns either with or without horizontal scan lines.

For any single pattern, the size of the "gate" established by that pattern is necessarily limited. This, in turn, places restraints on the checkout operator who must take the time to be certain that the UPC label passes the scanner window within this limited gate.

## Summary of the invention

To increase the size of the "gate" through which the UPC label must pass, a scanner built in accordance with the present invention generates at least two scan patterns which operate with optimum reading efficiencies in spatially displaced regions above the scanner window.

A scanner constructed in accordance with the invention includes a rotating circular member with a plurality of beam-deflecting holographic elements arranged in a multi-segment annular track. The holograms are divided into a plurality of sets with each hologram in each set being capable of focusing an incident collimated beam of radiation at a predetermined distance from the hologram. The scanner further includes means for directing a collimated beam of radiation along a predetermined path intersecting with the annular track of holographic segments. The circular member rotates about a fixed axis to move each holographic segment through the path of the collimated beam. The relative movement of the circular member and the beam causes the beam to be defected along a scan line determined by the function of the segment characteristics. The scanner further includes an optical system for redirecting the deflected beams to form a mumber of scan patterns equal to the number of sets of holograms. The scan patterns are spatially displaced relative to one another.

In one embodiment, the scan patterns are similar but are focused in different regions above the scanner window. In another embodiment, dissimilar scan patterns are generated.

## Brief description of the drawings

Figure 1 is a simplified perspective view showing the physical relationship between various components of a scanner constructed in accordance with the invention.

Figure 2 is a schematic diagram of an optical arrangement used to generate each holographic segment or holofacet of a scanner disk employed in the present invention.

Figure 3 shows various planes in which scan patterns generated in accordance with one embodiment of the invention are to be viewed.

Figure 4 shows one set of scan patterns at the scanner window.

Figures 5-7 are perspective views of scan traces and are used to more fully illustrate the three-dimensional configuration of the scan patterns shown in figure 4.

Figures 8-12 are at least partial views of the scan pattern taken at various planes defined in figure 3.

Figure 13 is a top view showing one arrangement of beam folding mirrors for generating the scan patterns described with reference to the foregoing figures.

Figure 14 is a perspective view of the beam folding mirrors.

Figure 15 is a view of dissimilar scan patterns which can be generated.

Figure 16 is a perspective view showing the three-dimensional traces of certain of the scan lines in the pattern illustrated in figure 15; and

Figure 17 is a top view of a beam folding mirror arrangement suitable for generating the pattern shown in figure 15.

## Description of the invention

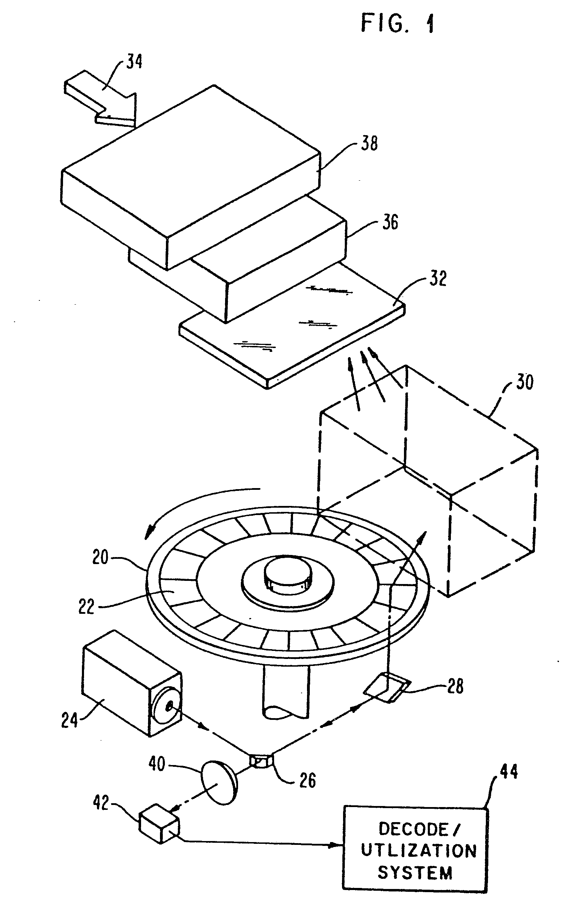

Figure 1 shows the relative physical positions of major elements of a scan pattern generator constructed in accordance with the present invention. Complex elements, such as sets of beam folding mirrors or specific scan patterns, are shown only in dotted bow outline in order to simplify the illustration. These complex elements are described later in more detail with reference to other figures.

In a preferred embodiment, the beam deflecting element of the scanner is a rotating glass disk 20 which carries an annular track 22 consisting of sectorial holographic film segments or holofacets. Preferably, the holofacets are sealed between two thin glass disks to prevent physical damage to the film material.

The light beam which is deflected by the individual holofacets in the track 22 is generated by a conventional laser 24. The laser beam is deflected through a right angle in a horizontal plane by a small mirror 26. The beam leaving mirror 26 is reflected from a larger mirror 28 toward the underside of disk 20 along a path intersecting the path of travel of the holofacets in track 22. While the beam which strikes the disk 20 is stationary, rotation of disk 20 causes individual holofacets to move through the beam at a high speed. The relative movement between the holofacets and the beam causes the emerging beam to be deflected along an arc. Generally speaking, the elevation of the arcuate scan line above the disk surface and the amount of skew, either forward or backward in the direction of disk rotation, are dependent upon the characteristics of the individual holofacets. As will be explained in more detail later, these characteristics are fixed at the time the holofacet is generated.

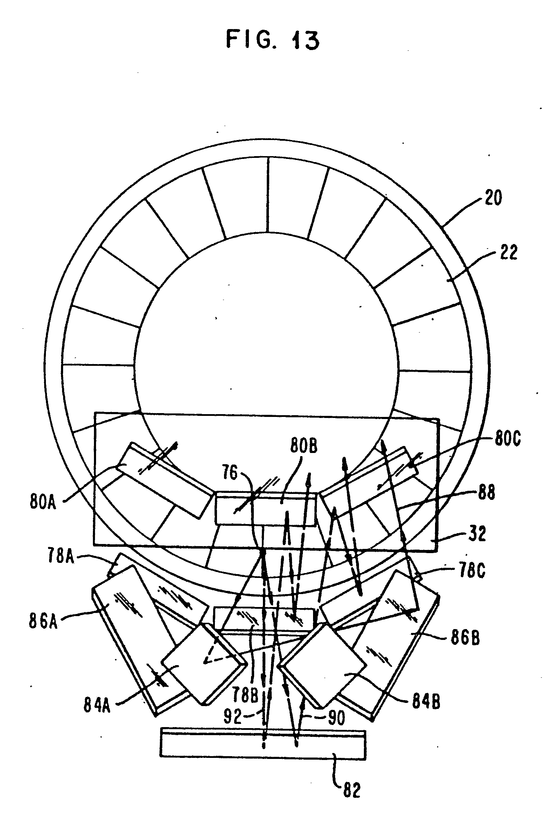

The deflected emerging beam is directed into a set 30 of beam folding mirrors which are located eccentrically above the disk 20. Specific preferred arrangements of mirrors will be described later with reference to figures 13, 14 and 17. The mirrors in the set 30 will redirect the deflected beam through a scanner window 32 in the surface of a checkout stand (not shown). Normally, items being processed at the checkout stand would be moved over the scanner window 32 in the direction indicated by arrow 34. At least two complete scan patterns are generated. To increase the size of the "gate" through which the UPC label must pass, the first pattern may be focused in a region 36 located near the surface of the scanner window 32. The second scan pattern may be focused in another region 38 located further above the surface of the scanner window 32. The second region 38 may also be advanced in the direction of oncoming products depending upon the particular scan pattern which is employed.

The scanner is preferably a retro-reflective system in which the light reflected from a label returns along at least part of the path followed by the emerging beam More specifically, light reflected from a label would follow a path including scanner window 32, beam folding mirrors within the set 30, disk 20 and mirror 28. The beam of returning light reflected from mirror 28 has a cross-sectional area substantially larger than the cross-sectional area of mirror 26. Most of the returning light by-passes mirror 26 and is focused by a planoconvex lens 40 onto a photosensitive element 42 such as a photodetector or photomultiplier tube. The function of the photosensitive element 42 is to generate an electrical signal having an amplitude which is proportional to the amplitude of the optical signal. The electrical signal is transmitted to a decoder/utilization system 44 which performs the conventional functions of finding and decoding the detected label.

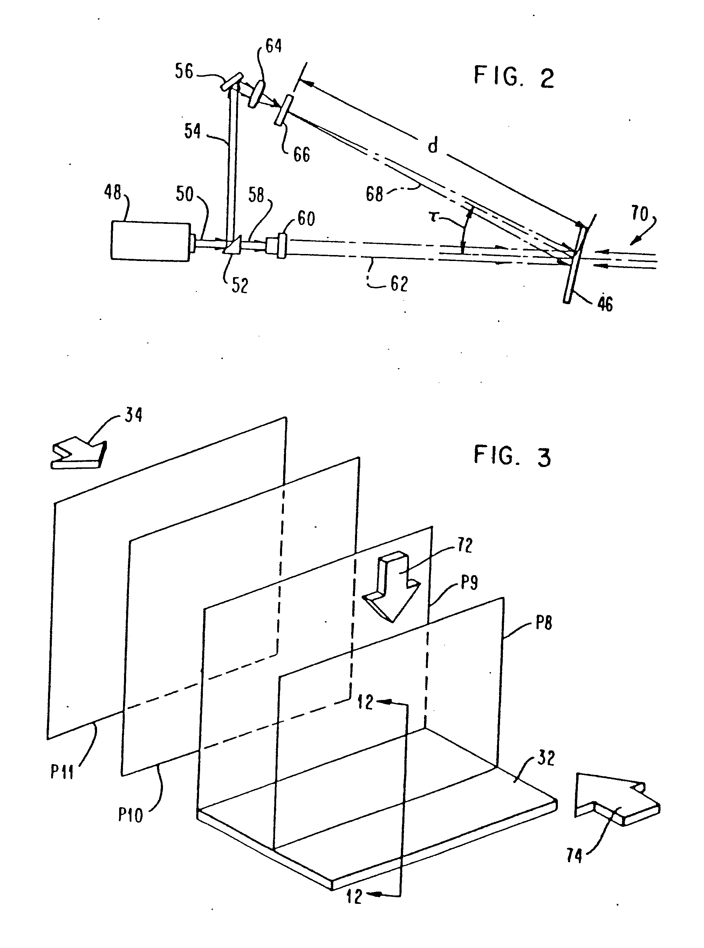

The generated scan patterns are a function of the paths traversed by the holofacet-deflected beams and of the particular configuration of beam folding mirrors within the set 30. The paths which are traversed by the deflected beams are, in turn, a function of the characteristics of the particular holofacet being traversed. These characteristics are fixed when the holofacet is recorded, preferably in accordance with an off-axis technique described below with reference to figure 2.

The individual holofacets are optical diffraction gratings formed by interfering two coherent beams of light at a photosensitive film 46. The film material may be a conventional photographic film, such as a silver halide film, or any other light sensitive material, such as a dichromated gelatin material. The light source is a laser 48 which produces a collimated, coherent light beam 50. The beam 50 is directed to a beam splitter 52 which reflects one beam component 54 towards a mirror 56 while allowing another beam component 58 to continue along its original path toward a beam expander 60. The expanded, collimated beam 62 leaving beam expander 60 is directed onto the photosensitive film 46 as a reference beam. Beam 54 is reflected from mirror 56, and passes through a beam converging lens 64 to a spatial filter 66. The spatial filter 66 acts as a point source for a diverging object beam 68 which strikes the photosensitive film 46 in registry with the collimated reference beam 62. The interference of the two beams at film 46 creates an optical diffraction grating which can be developed and fixed by conventional techniques.

If the developed film is illuminated with a collimated reconstructing beam directed along the path 70 which is opposite to the path of beam 62 as the film is being moved along an arcuate path (as it would be during disk rotation), a substantial beam component is diffracted along path 68. The angle t between the central axis of beam 68 and a continuation of the axis of beam 70 is equal to the angle between the axes of beams 62 and 68 used to generate the holofacet.

The diffracted beam 68 is reconstructed image of the optical conjugate of the diverging object beam 68 and will converge to a point focus at a distance from the film 46 determined by the original distance d between the film 46 and the spatial filter 66. By varying the angle between the reference beam and the object beam and by varying the distance d between the spatial filter 66 and the film 46 when making individual holofacets, the beam paths traced by deflected beams are fixed. The deflected beams strike mirrors within the set 30 along different lines and are redirected by those mirrors to generate a desired scan pattern or patterns.

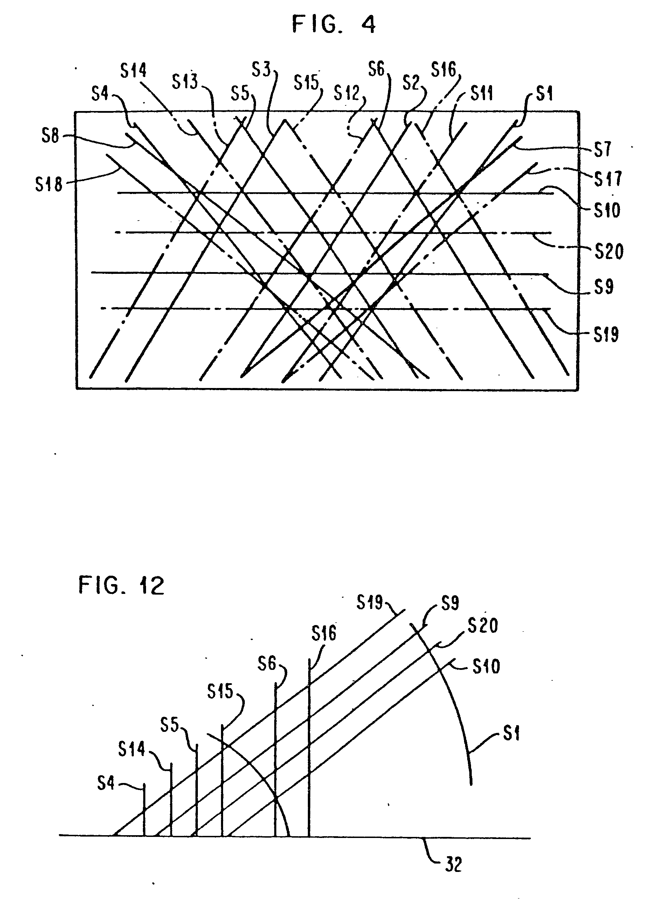

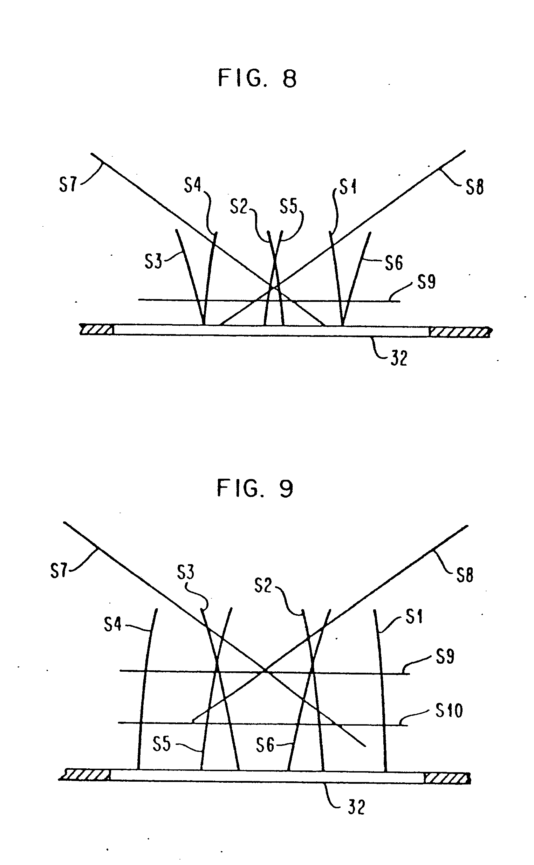

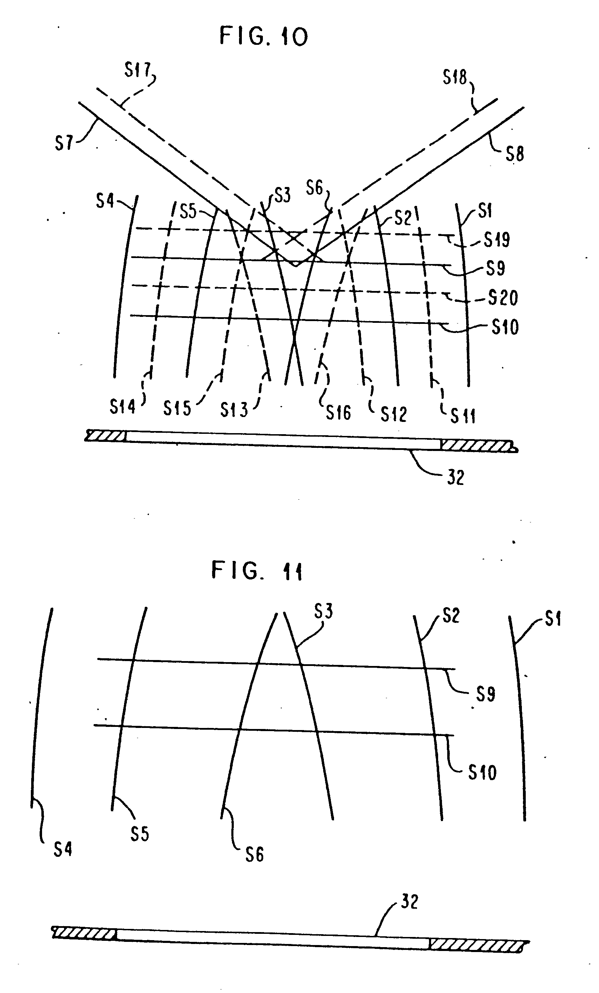

Scan patterns are three-dimensional and are not readily described by normal two-dimensional drawings. To more fully describe preferred scan patterns, it is necessary to describe those patterns as they would appear at various viewing planes which are defined with reference to figure 3. That figure shows the scanner window 32 and the directional arrow 34 indicating the direction from which label-bearing products approach the window 32. Scan patterns generated in accordance with one embodiment are shown in figure 4 as those patterns appear on the surface of window 32 when looking along the direction indicated by arrow 72. The same patterns are also described as those patterns would appear in four different planes when viewed along the direction indicated by arrow 74. Plane P8 (figure 8) extends along the center line of window 32 at a normal to the scanner surface. Plane P9 (figure 9) is also normal to the scanner surface extending from that surface at the leading edge of the scanner window 32. Plane P10 (figure 10) extends along a normal intersecting the scanner surface at a distance on the order of 1"-2" in front of the leading edge of window 32. Plane P11 (figure 11) also extends along a normal to the scanner surface at a distance approximately equal to twice the distance between plane P10 and the leading edge of window 32. Finally, certain scan lines are shown in figure 12 as they would be viewed along a line 12-12 to illustrate how corresponding lines in the different patterns are focused at different distances from the scanner window 32.

Line 12-12 represents a viewing plane which extends at a normal to the scanner surface at an angle of 45° relative to the leading edge of the scanner window.

When scanner window 32 is viewed from above or along arrow 72, the scan patterns generated in one embodiment appear as a number of intersecting lines and horizontal lines. Referring to Figure 4, two complete scan patterns are shown. Generally speaking, the two patterns are similar with each line in one pattern having a corresponding but displaced line in the other pattern. The direction of displacement is not the same for all corresponding lines in both patterns.

The first pattern consists of scan lines S1-S10. Of these, scan lines S1, S2 and S3 are generally parallel right hand diagonals while scan lines S4, S5 and S6 are similarly parallel left hand diagonals. These scan lines are paired (S1-S6, S2-S5, S3-S4) to form an interlaced X pattern which covers substantially all of the scanner window area. This scan pattern further includes relatively flattened intersecting scan lines S7 and S8 forming an asymmetric X. Finally, the pattern includes two horizontal scan lines S9 and S10 extending parallel to the leading and trailing edges of scanner window 32.

The second scan pattern consists of scan lines S11-S20. The scan lines S11, S12, S13 correspond to the scan lines S1, S2, S3 but are displaced toward the leading edge of window 32 relative to those scan lines. Similarly, scan lines S14, S15 and S16 correspond to scan lines S4, S5, S6 and are also displaced towards the leading edge of window 32. In contrast, scan lines S17 and S18 are displaced toward the trailing edge of the window 32 relative to the corresponding scan lines S7 and S8. The horizontal scan lines S19 and S20 in the second of the two patterns are also displaced toward the trailing edge of window 32 relative to the corresponding scan lines S9 and S10 in the first of the two patterns.

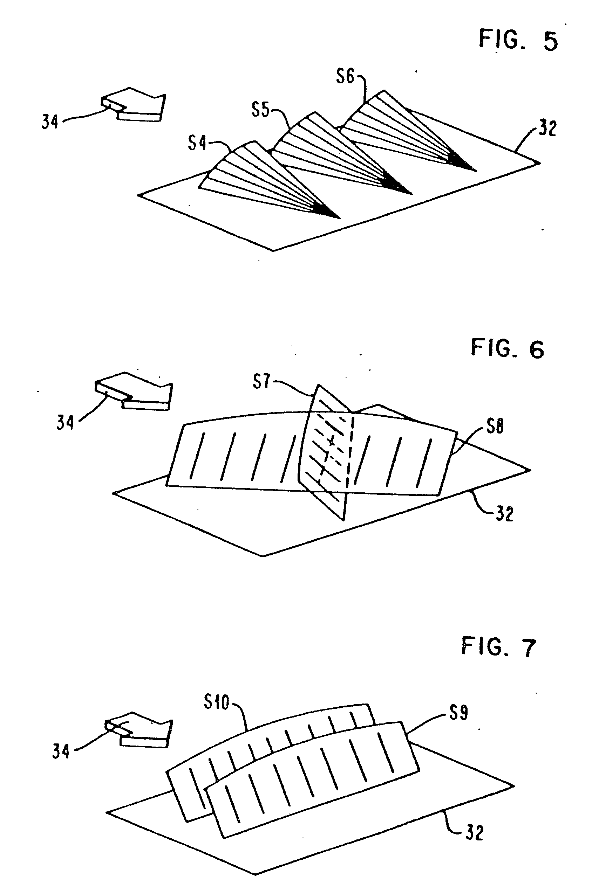

While it is a common practice to consider scan patterns in terms of the two-dimensional traces which those patterns make at the scanner window, the traces alone do not clearly define the three-dimensional scan pattern which is being generated. For example, scan lines S4, S5 and S6 appear only as left hand diagonal lines in figure 4. Referring to figure 5, it can be seen that the scan lines in scanner window 32 represent only two of the three dimensions traced by the emerging beams.

When viewed in "time-lapse" perspective, scan lines S4, S5, S6 appear as beams which sweep upwardly from the scanner window 32 in a vertical fan-shaped configurations. The fan-shaped beams are shown as terminating along arcs. These arcs simply represent the points at which the beams are most sharply focused. The beams begin to diverge at points beyond the arcs. The scan lines S1-S3 are described by the same fan-shaped representation as lines S4-S6. While lines S4-S6 are directed from right to left, lines S1-S3 are directed from left to right.

Figure 6 is a time-lapse representation of scan lines S7 and S8. Scan line S7 emerges from the scanner window at an angle of approximately 45° sweeping from the left hand trailing edge toward the right hand leading edge of window 32. Scan line S7 is focused along a nearly linear arc which is generally parallel to the scanner window surface. Scan line S8 is similar to scan line S7 but sweeps from right to left beginning at the trailing edge window 32.

Figure 7 shows horizontal scan lines S9 and S10. Each of these scan lines emerges from the scanner window 32 at an angle of roughly 45°. Each is focused along a nearly linear arc which generally parallels the leading and trailing edges of window 32 at a uniform distance above the window surface.

The general three-dimensional configuration of the scan lines of the second pattern are similar to those for corresponding lines in the first pattern. The scan lines in the second pattern are, however, displaced relative to corresponding lines in the first pattern and are focused at different distances from the scanner window. For example, scan lines S14, S15 and S16 would be located to the right of scan lines S4, S5, S6 shown in figure 5 but would have an arc of focus located further away from the scanner window in the direction of arrow 34.

Figures 8, 9 and 11 show various scan lines in one of the two patterns in the corresponding planes P8, P9 a,d P11 defined with reference to figure 3. Figures 10 and 12 show certain scan lines in both of the scan patterns when viewed in plane P10 and along the vertical plane defined by line 12-12. If figures 8-11 are viewed in sequence, it will be seen that the vertical scans S1-S6 are initially centered in scanner window 32. As the viewer moves forward from one viewing plane to the next or toward the arrow 34, it can be seen that scan lines S1-S3 shift to the right as they diverge and become elevated. Scan lines S4-S6 similarly shift to the left, diverge, and become elevated. Scan lines S7 and S8 increase in elevation when viewed in successive planes.

Scan lines S9 and S10 are substantially parallel to the upper surface of the scanner and increase in elevation when viewed in successive planes.

Referring to figure 10 specifically, the projected scan lines from the pattern made up of scan lines S10-S20 are also shown. Those figures show that the scan pattern made up of scan lines S11-S20 is shifted both vertically and horizontally relative to the scan pattern made up of scan lines S1-S10. The relative displacement of the two patterns increases the size of the "gate" through which a UPC label must pass if it is to be successfully scanned.

Figure 12 shows only certain of the scan lines from the two patterns. It can be seen that corresponding scan lines are focused at different horizontal and vertical distances from the leading edge of window 32, to greatly enlarge the volume which defines the "gate" discussed above.

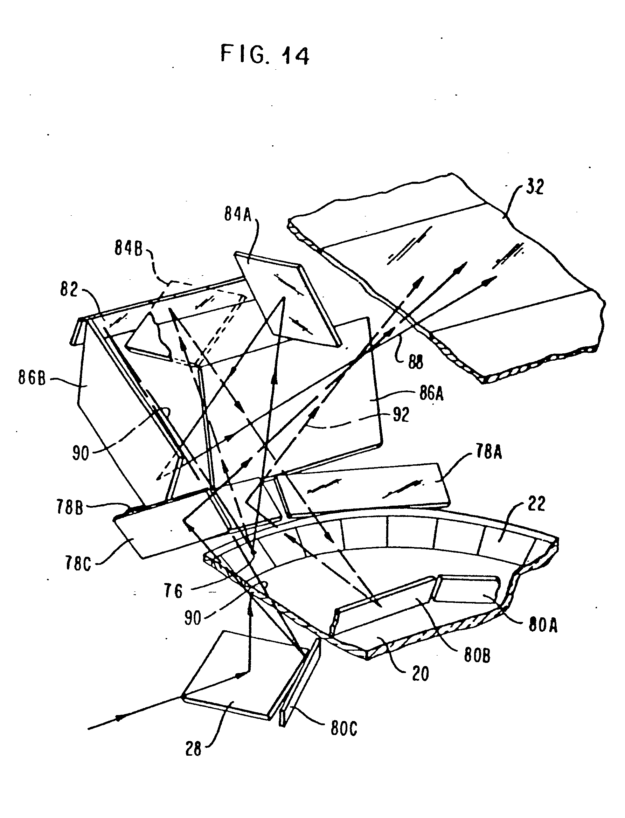

Figures 13 and 14 are plan and perspective views, respectively, of a set of beam folding mirrors which can be used to generate the scan patterns described with reference to figures 4 through 12. The laser light beam which is reflected from the mirror 28 beneath disk 20 impinges on the disk 20 at a fixed point 76. As each holofacet is rotated through the point of intersection, the emerging beam is deflected through an arc centered on point 76. The elevation and skew of the arc, as previously discussed, are functions of the holofacet characteristics. The deflected beams may strike the same sets of mirrors in different places to produce parallel scan lines such as scan lines S1-S3 or S9, S10. The beams may also strike different sets of mirrors to produce intersecting scan lines such as scan lines S7, S8.

The set 30 of beam folding mirrors includes a first triad of mirrors, consisting of mirrors 78A, 78B and 78C, located adjacent the edge of disk 20. The bottom edge of each of mirrors 78A-78C is parallel to the surface of disk 20 while the reflecting surfaces are at an angle of approximately 135° to the disk surface. A second triad 80A, 80B, 80C of mirrors is located directly above the surface. These mirrors also have bottom edges parallel to the disk surface. The set 30 further includes a long mirror 82 located well above and away from the surface of the disk 20. The reflecting surface of the mirror 82 faces downwardly or towards the disk. The set further includes smaller mirrors 84A and 84B, the reflective surfaces of which are at compound angles relative to the disk surface. Generally speaking, those reflective surfaces face down and inwardly relative to the disk. Finally, the set includes two relatively large mirrors 86A, 86B, the reflective surfaces of which face the scanner window 32.

The path followed by a deflected beam will be generally described for various groups of scan lines making up the previously described scan patterns. Scan lines S4-S6 are generated by directing the deflected beam along a beam path 88 including mirrors 84A and 86B. The beam reflected from mirror 86B is directed upwardly through the scan window 32. The separation between scan lines S4, S5, S6 is established by sweeping mirrors 84A and 86B along spaced parallel lines. The same set of mirrors is used in generating scan lines S14, S15, S16 of the second scan pattern.

A complementary set of mirrors is used in generating scan lines S1, S2, S3 in the first pattern and S11, S12, S13 in the second pattern. The complementary set consists of small mirror 84B and larger mirror 86A. The beam path is from the surface of the disk 20 to mirror 84B to mirror 86A and through the scanner window 32.

Scan line S7 and its corresponding scan line S17 in the other scan pattern are generated by means of mirrors 82, 80C and 78C. The beam path for both of these scan lines is beam path 90 from disk 20 to mirror 82 to mirror 80C to mirror 78C and through the scanner window. Scan lines S8 and S18 are generated using a complementary set of mirrors consisting of mirrors 78A, 80A and 82.

The horizontal scan lines S9, S10 and complementary scan lines S19, S20 are generated by sweeping mirrors 82, 80B and 78B in sequence, as shown by beam path 92.

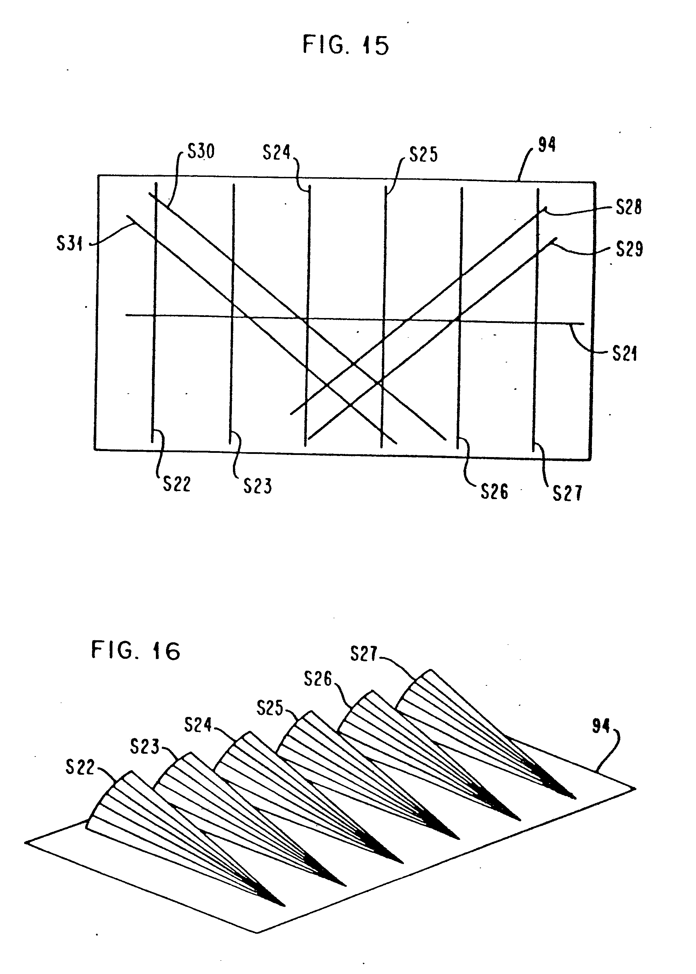

Dissimilar scan patterns may be generated using the holographic disk and sets of beam folding mirrors to take advantage of the desirable characteristics of each pattern. One such pattern is shown in figure 15 as it would appear at the scanner window. The illustrated pattern is a combination of a stitch-bar pattern and a double X pattern. The stitch-bar pattern consists of a horizontal line S21 and the plurality of upwardly emerging lines S22-S27 which are generally parallel to the side edges of a scanner window 94. The second scan pattern consists of four diagonal scan lines. Scan lines S28 and S29 can be described as right hand lines, while scan lines S30 and S31 can be described as left hand diagonal lines. The scan lines S28 through S31 have the general three-dimensional configuration described with reference to figure 6. Scan line S21 would have the same general three-dimensional configuration as either scan line S9 or S10 described in figure 7. The three-dimensional configuration of scan lines S22-S27 are illustrated in figure 16. Each of these scan lines sweeps upwardly from beneath the surface of scanner window 94.

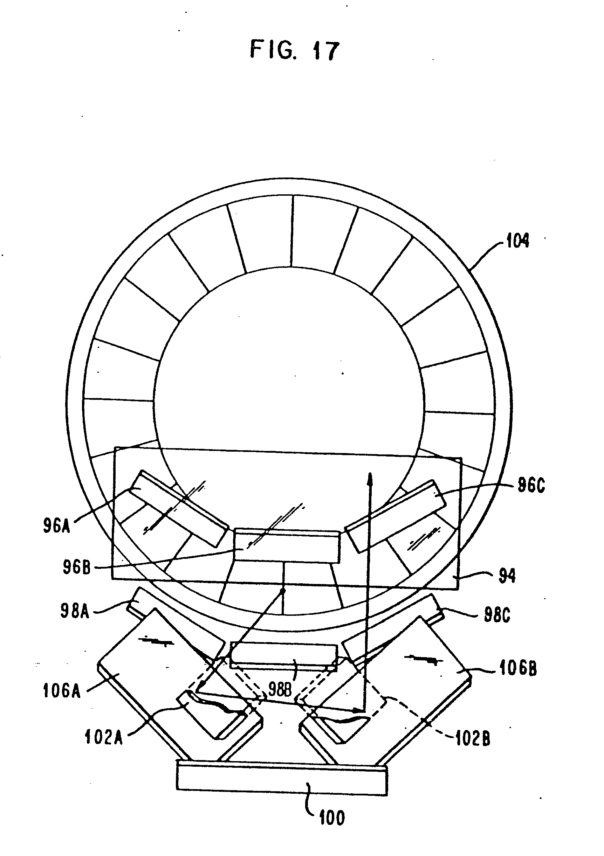

Figure 17 is a plan view of a set of beam folding mirrors suitable for generating the dissimilar scan patterns illustrated in figure 15. A number of mirrors in the set occupy the same relative positions as in the set described with reference to figures 13 and 14 since those mirrors are used to generate the same type of scan lines. More specifically, the set shown in figure 17 includes a first triad of mirrors 96A, 96B, 96C and a second triad of mirrors 98A, 98B, 98C. The illustrated set further includes a relatively long horizontal mirror 100. These mirrors are used to generate the scan lines S21 and S28-S31. The beam path for generating scan line S21 includes, in sequence, mirrors 100, 96B and 98B. The beam paths for scan lines S28 and S29 include, in sequence, mirrors 100, 96C and 98C. Scan lines S30 and S31 are generated by directing a beam through the sequence of mirrors 100, 96A and 98A.

The set further includes smaller mirrors 102A and 102B, the reflecting surfaces of which generally face down and in toward the surface of a rotating disk 104. The mirrors 102A and 102B are located above much larger mirrors 106A and 106B. The mirror sequence for generating scan lines S22, S23, and S24 consists of mirror 102B and 106A. The mirror sequence for generating scan lines S25, S26 and S27 consists of small mirror 102A and larger mirror 106B.

A detailed embodiment of the invention has been described. Variations and modifications in the embodiment will occur to those skilled in the art once the invention becomes known to them.

CLAIMS

1. Holographic scanner for generating scan patterns characterized in that it comprises :

a circular member having beam-deflecting holograms arranged in segments of a multi-segment annular track, said holograms being divided into a plurality of sets with each hologram in each set being capable of focussing an incident collimated beam of radiation at a predetermined distance from the hologram;

means for directing a collimated beam of radiation along a predetermined path intersecting with the annular track;

means for rotating said circular member about a fixed axis to move each hologram segment through the path of the collimated beam, the relative movement between each hologram segment and the beam causing the beam to be deflected along a predetermined scan line as a function of the segment characteristics; and

an optical system for redirecting the deflected beam to form a number of scan patterns equal to the number of sets of holograms, said scan patterns being spatially displaced.

2. Holographic scanner as defined in claim 1 wherein the holograms are divided into two sets to generate two scan patterns in different regions relative to the plane of rotation of said circular member.

3. Holographic scanner as defined in claim 2 wherein the holograms are divided into two sets to generate two similar scan patterns having corresponding lines focused at different distances from said circular member.

4.  Holographic scanner as defined in claim 2 wherein dissimilar scan patterns are generated in the two regions.

5.  Holographic scanner as defined in any one of claims 2, 3 or 4 wherein said first and second sets of holograms occupy adjacent sectors on said circular member.

6.  Holographic scanner as defined in claim 5 wherein the holograms in said first set occupy a first sector of approximately 180° on the surface of said circular member while the holograms in said second set occupy a second sector of approximately 180°.

7.  Holographic scanner as defined in any one of the preceding claims wherein said circular member is a transparent disk having said multi-segment annular track of holograms located at a predetermined radial distance from the center of the disk.

8.  Holographic scanner as defined in claim 7 wherein the holograms are sandwiched between two bonded disks of transparent material.

9.  Holographic scanner as defined in claim 7 or claim 8 wherein said optical system is composed of :

    a first set of mirrors, the longitudinal axes of which extend along planes parallel to the plane of the transparent disk, said first set of mirrors being adapted to redirect a deflected beam along paths extending approximately parallel to the plane of the transparent disk; and

    a second set of mirrors, the longitudinal axes of which extend along planes intersecting with the plane of the transparent disk, said second set of mirrors being adapted to redirect a deflected beam along paths approximately parallel to a normal from the surface of the transparent disk.

10. Label sensing system for reading bar code labels affixed to items being moved past a transparent window comprising :

a holographic scanner as defined in any one of claims 1 to 9 in which said optical system redirects the deflected beam to form scan patterns extending over the area of said window;

sensing means for detecting scattered radiation returned through the window after reflection from passing items, said sensing means being adapted to generate electrical signals proportional to the amplitude of the reflected radiation.

FIG. 1

DECODE /
UTLIZATION
SYSTEM

FIG. 2

FIG. 3

FIG. 4

FIG. 12

FIG. 5

34

S6

S5

S4

32

FIG. 6

34

S7

S8

32

FIG. 7

34

S10

S9

32

FIG. 8

FIG. 9

FIG. 10

FIG. 11

## FIG. 13

FIG. 14

FIG. 15

FIG. 16

FIG. 17